# FASCICULE DE BREVET EUROPEEN

(11) **EP 1 628 559 B1**
(45) Date de publication et mention de la délivrance du brevet: **11.06.2008**
(21) Numéro de dépôt: 04767166.4
(22) Date de dépôt: 25.05.2004
(51) Int. Cl.: A47J 37/06

(54) **APPAREIL ELECTROMENAGER COMPORTANT DEUX SOUS-ENSEMBLES CHAUFFANTS ARTICULES ENTRE EUX**
HAUSHALTSGERÄT MIT ZWEI GEGENSEITIG ANGELENKTEN HEIZUNTERBAUGRUPPEN
HOUSEHOLD APPLIANCE WITH TWO MUTUALLY HINGED HEATING SUB-ASSEMBLIES

(30) Priorité: 28.05.2003 FR 0306520; 06.06.2003 FR 0306896
(43) Date de publication de la demande: 01.03.2006
(73) Titulaire: SEB SA, 69130 Ecully (FR)
(72) Inventeur: GRUAZ, Denis, F-74370 Villaz (FR)
(74) Mandataire: Somnier, Jean-Louis
(86) Numéro de dépôt international: PCT/FR2004/001288
(87) Numéro de publication internationale: WO 2004/107941

(56) Documents cités:
- CH-A- 669 243
- FR-A- 2 516 352
- US-A1- 2002 153 366

## Description

La présente invention concerne un appareil électroménager comportant deux sous-ensembles chauffants articulés entre eux, par exemple un gaufrier, un gille-viande, un appareil à croque-monsieur.

On connaît des appareils électroménagers du type comportant deux sous-ensembles chauffants qui sont articulés entre eux entre une position fermée et une position ouverte et des résistances électriques liées chacune à un sous-ensemble et, ensemble, à un organe d'alimentation électrique adapté à alimenter les résistances électriques des deux sous-ensembles chauffants que ces derniers soient en position ouverte ou en position fermée.

Un tel appareil est par exemple décrit dans le demande de brevet suisse CH 680 185. Dans ce document, afin de permettre le nettoyage de l'appareil, pour chaque sous-ensemble chauffant, la plaque de cuisson est séparable de la coquille qui forme le corps du sous-ensemble, et la résistance qui est fixée à un organe d'alimentation propre au sous-ensemble chauffant correspondant, est elle-même séparable de la coquille du fait que l'organe d'alimentation est séparable du sous-ensemble chauffant. La séparation de chaque sous-ensemble chauffant en trois parties (coquille, plaque de cuisson et résistance électrique solidaire de son organe d'alimentation correspondant) facilite le nettoyage du sous-ensemble.

Toutefois, afin d'empêcher toute extraction des résistances électriques du sous-ensemble correspondant tant qu'elles ont une certaine température prédéterminée, l'appareil comprend un dispositif de sécurité qui comprend, d'une part, des éléments qu sont solidaires de la résistance électrique, et, d'autre part, des éléments qui sont solidaires de la plaque de cuisson. Ainsi, le bon fonctionnement de ce dispositif est tributaire du positionement précis de la résistance électrique par rapport à la plaque de cuisson, c'est à dire du positionnement précis à la fois de la résistance électrique et de la plaque de cuisson par rapport à la coquille correspondante.

Le problème posé est de réaliser un appareil du type précité pouvant être très facilement nettoyé, et dont le dispositif de sécurité relatif à la mise en marche de l'appareil n'est pas tributaire d'un décalage (qui en lui-même ne présente pas un risque) dans le positionnement des éléments constitutifs de chaque sous-ensemble chauffant (plaque de cuisson, résistance électrique et coquille).

La solution proposée par la présente invention est un appareil du type précité dont l'organe (ou bloc) d'alimentation est séparable des résistances et comprend des contacteurs adaptés à établir de façon séparable la connexion électrique avec les résistances des deux sous-ensembles chauffants.

Ainsi, l'organe d'alimentation électrique qui comprend l'ensemble des composants électriques destinés à alimenter et à contrôler l'alimentation des résistances électriques des deux sous-ensembles chauffants, n'est pas solidarisé aux résistances. L'organe d'alimentation et les résistances électriques coopérent entre eux à la manière d'une prise mâle et d'une prise femelle. Quand l'organe d'alimentation est séparé des deux sous-ensembles chauffants, l'ensemble formé par ces deux sous-ensembles chauffants ne comporte pas de composants électriques et il peut donc être nettoyé avec abondance d'eau, notamment en utilisant un lave-vaisselle. De plus, les résistances électriques n'étant pas solidaires de l'organe d'alimentation, la séparation de l'organe d'alimentation des sous-ensembles chauffants n'entraîne pas l'extraction des résistances hors des sous-ensembles chauffants, et de ce fait, il n'est pas nécessaire d'avoir un dispositif de sécurité particulier pour autoriser l'extraction des résistances électriques.

D'autres avantages et particulartités de la présente invention apparaîtront dans la description du mode de réalisation qui est illustré dans les figures annnexées et qui est donné à titre d'exemple non limitatif.
La figure 1 est une vue en perspective éclatée d'un appareil électroménager conforme à la présente invention ;
La figure 2 est une vue en coupe simplifiée de l'appareil électroménager selon l'axe de la charnière ;
La figure 3 est une vue en perspective de dessous, d'un organe de connexion électrique conforme à la présente invention ;
La figure 4 est une vue en perspective de dessous, d'un boîtier de l'organe de connexion, sans son capot de protection ;
La figure 5 est une vue en perspective simplifiée illustrant la coopération, en position de libération, entre une tige de charnière et le boîtier principal selon un mode de réalisation particulier ;
La figure 6 est une vue semblable à la figure 5, le boîtier principal étant en position de sélection ;
La figure 7 est une vue semblable aux figures 5 et 6, le boîtier principal étant en position d'arrêt ; et
La figure 8 est une vue semblable aux figures 5 à 7, le boîtier principal étant en position de connexion ;
La figure 9 est une vue en coupe schématique illustrant la coopération entre le boîtier principal de l'organe de connexion et un premier type d'organe de commande manuelle ; et
La figure 10 est une vue similaire à la figure 9, l'organe de commande manuelle étant d'un second type.

Un appareil électroménager 1 (en l'occurrence un grille viande) comporte deux sous-ensembles chauffants 2,3 qui sont articulés entre eux par une charnière 4 entre une position fermée et une position ouverte.

Chaque sous-ensemble chauffant 2,3 comprend une coquille 5 qui forme le corps du sous-ensemble chauffant 2,3 correspondant, une plaque de cuisson 6 qui est supportée par la coquille 5 correspondante et qui est adaptée à recevoir la nourriture à cuire, et une résistance électrique 7 qui est adaptée à fournir la chaleur de cuisson à la plaque de cuisson 6 correspondante.

Par ailleurs, l'appareil électroménager 1 comprend un organe d'alimentation électrique 8 qui comprend l'ensemble des composants électriques de l'appareil (dispositifs de régulation, de connexion et de signalisation, bouton de réglage du thermostat, voyant lumineux...) concourant à l'alimentation électrique contrôlée des résistances. Séparable des deux sous-ensembles chauffants 2,3, l'organe 8 ne gêne pas l'articulation de ces deux sous-ensembles chauffants, quand il est connecté. Ainsi, l'appareil électroménager 1 peut prendre plusieurs positions: la position fermée dans laquelle il peut griller la nourriture qui est prise entre les deux plaques de cuisson 6, une position dite « four » dans laquelle les deux plaques de cuisson 6 sont dans une position semblable à celle de la position fermée, (avec toutefois un écart entre elles d'environ 50 mm afin de définir un volume de cuisson), la position ouverte dans laquelle les deux plaques de cuisson 6 forment un angle compris entre 60° et 100° environ, et une position dite «barbecue» dans laquelle les deux plaques de cuisson 6 sont alignées à plat et forment un angle de 180°.

Conformément à la présete invention, l'organe d'alimentation 8 est séparable des résistances électriques 7 et comprend des contacteurs 9 adaptés à établir la connexion électrique avec les résistances, et plus précisément avec les bornes de connexion 10 situées aux extrémités des résistances électriques 7.

Ainsi, quand l'organe d'alimentation 8 est séparé des sous-ensembles chauffants 2,3, l'ensemble formé par ces deux sous-ensembles ne contient aucun élément électrique ou électronique et peut donc être nettoyé à grande eau, par exemple au lave-vaisselle.

La connexion électrique est particulièrement simple, l'organe de connexion 8 s'enfichant dans les deux sous-ensembles chauffants 2,3 à la manière d'une prise électrique.

Dans le présent mode de réalisation, pour chaque sous-ensemble chauffant 2,3, la résistance électrique 7 est fixée à la plaque de cuisson 6 correspondante. De plus, pour chaque sous-ensemble chauffant 2,3, la plaque de cuisson 6 est fixée à la coquille 5 correspondante. De ce fait, chaque sous-ensemble chauffant 2,3 forme une pièce unique que l'utilisateur ne peut pas démonter. La fixation de la plaque de cuisson 6 à la coquille 5 correspondante n'est pas étanche et, l'eau de lavage et de rinçage peut s'infiltrer à l'intérieur. Afin de permettre un bon écoulement de l'eau, les pièces constitutives des sous-ensembles chauffants 2,3 ne comportent pas de zone de rétention d'eau. Evidemment, les bornes de connexion 10 sont étanches.

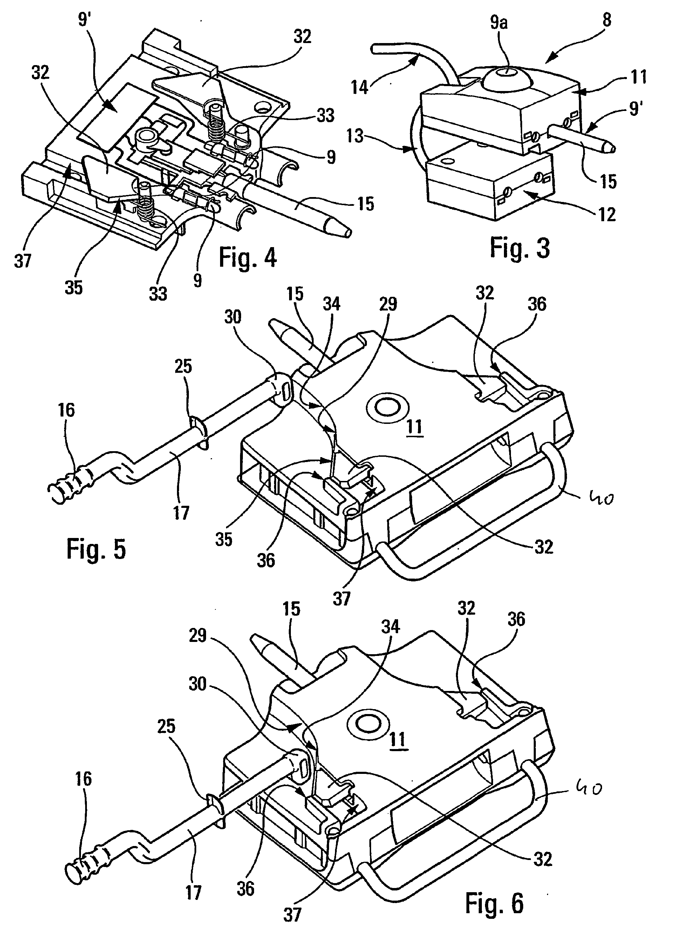

Comme on peut le voir à la figure 3, dans le présent mode de réalisation, l'organe d'alimentation électrique 8 comprend un boîtier principal de connexion 11 qui est adapté à établir la connexion électrique avec la résistance électrique 7 d'un premier sous-ensemble chauffant 2, et un boîtier secondaire de connexion 12 qui est adapté à établir la connexion électrique avec la résistance électrique 7 de l'autre sous-ensemble chauffant 3. Les deux boîtiers 11,12 se connectent à la manière d'une prise électrique et sont liés de façon souple l'un à l'autre (dans le présent exemple, cette "articulation" relative est faite par un câble de liaison 13 qui assure la continuité électrique). Ce câble de liaison 13 assurant l'articulation entre les deux boîtiers 11,12 est totalement indépendant de la charnière 4 qui assure l'articulation des deux sous-ensembles chauffants 2,3.

Ainsi, ici pour faciliter la réalisation, l'organe de connexion 8 comprend un boîtier principal 11, un boîtier secondaire 12, un câble d'alimentation 14 qui peut être branché sur le secteur et qui débouche dans le boîtier principal 11, et le câble de liaison 13.

Dans le présent exemple, le boîtier secondaire 12 ne comprend que les contacteurs 9 par lesquels il alimente la résistance électrique 7 du deuxième sous-ensemble chauffant 3. L'organe 8 (de préférence le boîtier principal 11) comporte, outre les contacteurs 9 par lesquels il alimente la résistance électrique 7 du premier sous-ensemble chauffant 2, l'ensemble des dispositifs électriques et électroniques 9' de contrôle, de régulation, de visualisation (afficheur 9a), et notamment une sonde de température 15 qui fait saillie hors du boîtier principal 11 et qui vient en contact avec la plaque de cuisson 6 du premier sous-ensemble chauffant 2 quand le boîtier principal 11 est connecté au premier sous-ensemble chauffant 2. Cette concentration des dispositifs électriques (hors les résistances) sur un organe amovible facilite l'utilisation de l'appareil et est gage de sécurité.

Le boîtier principal 11 comprend un organe de préhension 40 (en l'occurrence une poignée) permettant de le déplacer manuellement et facilement de l'une à l'autre de ses positions.

En outre, afin de fiabiliser la tenue du boîtier principal 11 dans sa position connecté avec la résistance électrique 7 et éviter ainsi tout déplacement non souhaité, il est préférable que l'utilisateur doive fournir un certain effort pour le déplacer hors de sa position connecté. Afin de faciliter un tel déplacement tout en conservant la fiabilité du positionnement, le premier sous-ensemble chauffant 2 comprend un organe de commande manuelle 41 qui est mobile entre une position de repos et une position d'éjection. Cet organe 41 est adapté à coopérer avec le boîtier principal 11 de façon à entraîner le bopitier 11 hors de sa position connecté quand il passe de sa position de repos à sa position d'éjection.

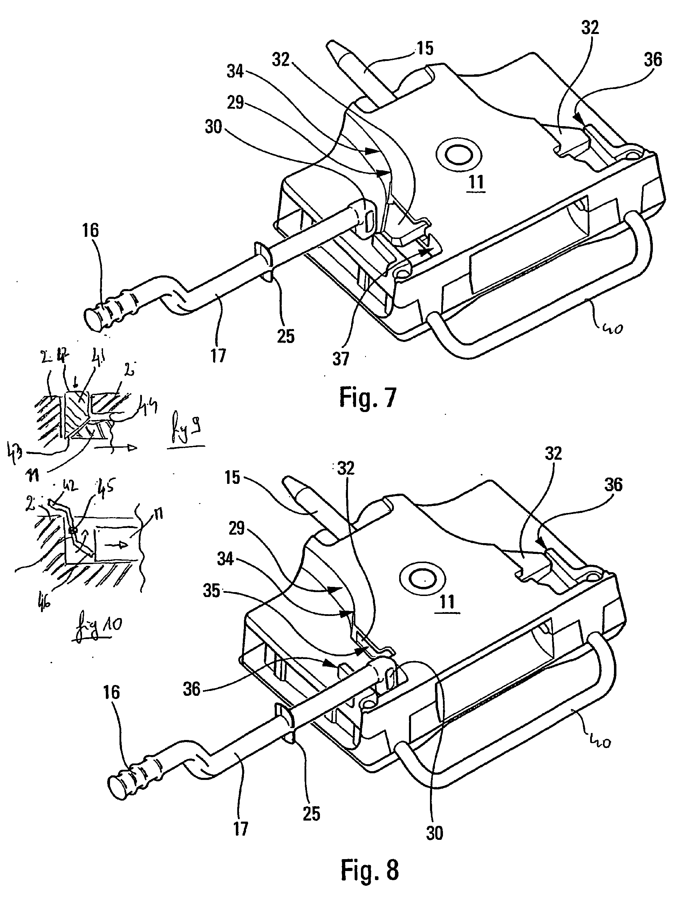

Comme on peut le voir à la figure 9, dans un premier mode de réalisation, l'organe de commande manuelle 41 est un bouton 41 qui est monté coulissant dans le premier sous-ensemble chauffant 2. Ce bouton 41 comprend une surface de commande manuelle 42 accessible par l'utilisateur, et une surface inclinée 43 qui est adaptée à glisser contre une surface inclinée complémentaire 44 portée par le boîtier principal 11 de façon à déplacer ce dernier.

Comme on peut le voir à la figure 10, dans un second mode de réalisation, l'organe de commande manuelle 41 est un levier 41 qui est monté pivotant par rapport au premier sous-ensemble chauffant 2 autour d'un axe de pivotement 45. Ce levier 41 comprend, outre la surface de commande manuelle 42, une surface de came 46 qui est adaptée à venir en butée contre le boîtier principal 11 et à le déplacer quand le levier 41 pivote.

Le boîtier secondaire 12 comprend également un organe de préhension 50 (en l'occurrence une surface facilement accessible) permettant de le déplacer manuellement et facilement de l'une à l'autre de ses positions.

En outre, dans le présent mode de réalisation, le boîtier principal 11 est adapté coopérer avec la charnière 4 de sorte que, d'une part, quand il est séparé du premier sous-ensemble chauffant 2, la charnière 4 est conformée de manière à permettre la séparation des deux sous-ensembles chauffants 2,3, et, d'autre part, quand il est connecté à la résistance électrique 7 correspondante, la charnière 4 est conformée de manière à pouvoir réaliser l'articulation entre les deux sous-ensembles chauffants 2,3.

Ainsi, quand l'organe de connexion 8 est séparé des deux sous-ensembles chauffants 2,3, ceux-ci se séparent l'un de l'autre ce qui a l'avantage de faciliter leur nettoyage (manipulation plus aisée et encombrement - notamment dans le lave-vaisselle - beaucoup plus faible).

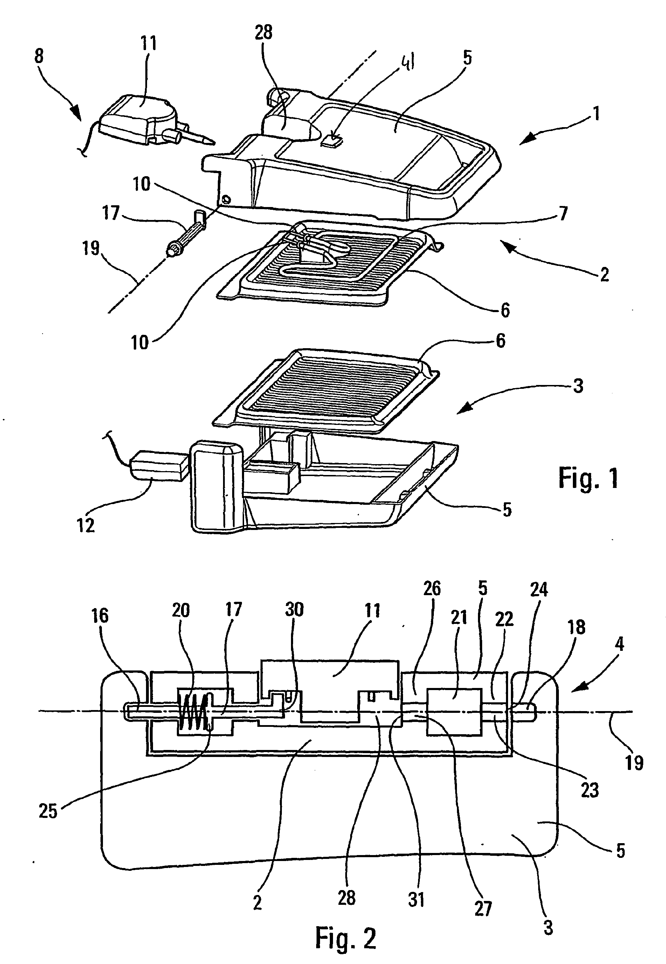

A cet effet, le premier sous-ensemble chauffant 2 comporte, de chaque côté latéral, un élément d'articulation 16 porté par une tige 17, et réciproquement, le deuxième sous-ensemble chauffant comporte, de chaque côté, un logement 18 (pour plus de compréhension, à la figure 2, l'illustration ne représente une tige 17 que d'un seul côté, l'autre côté étant laissé vide). L'élément d'articulation 16 est formé par une première extrémité de la tige 17 et est adapté à pénétrer dans le logement 16 correspondant de façon à réaliser la charnière 4.

L'élément d'articulation, et donc ici chaque tige 17, est mobile entre une position rétractée de libération des sous-ensembles et une position engagée d'articulation relative de ceux-ci. Quand la tige 17 est en position rétractée, l'élément d'articulation 16 ne peut pénétrer dans le logement 18 correspondant, et de ce fait, les deux sous-ensembles chauffants 2,3 peuvent être séparés. Quand la tige 17 est en position d'articulation, l'élément d'articulation 16 est dans le logement 18 correspondant (pourvu que les deux sous-ensembles chauffants 2,3 aient été préalablement disposés correctement l'un par rapport à l'autre), la charnière 4 étant réalisée, les deux sous-ensembles chauffants 2,3 étant réunis l'un à l'autre de façon pivotante autour de l'axe 19 de la charnière 4 (figure 2).

Dans le présent exemple, chaque tige 17 est sollicitée vers sa position rétractée par un organe de rappel (ressort) 20. Chaque tige 17 est montée coulissante par rapport au premier sous-ensemble chauffant 2 selon la direction de l'axe 19 de la charnière 4.

De chaque côté latéral, le premier sous-ensemble chauffant 2 comporte un logement 21 traversé par la tige 17 correspondante. Chaque logement 21 est délimité d'un côté par une paroi externe 22 qui est perpendiculaire à l'axe 19, qui est adjacente au logement 18 correspondant du deuxième sous-ensemble chauffant 3 quand les deux sous-ensembles chauffants 2,3 sont correctement disposés l'un par rapport à l'autre, et qui est traversée par un canal externe 23 débouchant, par un orifice 24, face au logement 18 correspondant.

Chaque élément d'articulation 16 est monté coulissant dans le canal externe 23 correspondant. Il fait saillie hors de l'orifice 24 correspondant quand la tige 17 est dans sa position d'articulation, et est logé dans le canal externe 23 quand la tige 17 est dans sa position rétractée.

Pour chaque tige 17, la position rétractée est définie par un ergot 25 solidaire de la tige 17 et venant en butée contre une paroi interne 26 qui délimite le logement 21 correspondant, qui fait face à la paroi externe 22 correspondante, et qui est traversée par un canal interne 27 dans lequel la tige 17 est adaptée à coulisser.

Le boîtier principal 11 est monté coulissant sur le premier sous-ensemble chauffant 2 entre une position de libération dans laquelle il peut être séparé du premier sous-ensemble chauffant 2 et dans laquelle l'élément d'articulation 16 est dans sa position rétractée, et une position de connexion qui est la seule position dans laquelle il alimente la résistance électrique 7 correspondante et dans laquelle l'élément d'articulation 16 est dans sa position d'articulation.

Le premier sous-ensemble chauffant 2 comporte une cavité 28 dans laquelle le boîtier principal 11 est adapté à coulisser selon une direction de translation perpendiculaire à l'axe 19 de la charnière 4.

Le boîtier principal 11 comprend une surface de guidage 29 conformée de manière à entraîner, pendant le déplacement du boîtier principal 11 entre ses positions de libération et de connexion, un élément d'entraînement 30 qui est solidaire de l'élément d'articulation 16 et qui, dans le présent exemple, est constitué par la deuxième extrémité de la tige 17 correspondante. La surface de guidage 29 agit ainsi comme une surface de came.

Chaque canal interne 27 débouche, par un orifice 31, dans la cavité 28, face au boîtier principal 11. Chaque élément d'entraînement 30 est monté coulissant dans le canal interne 27 correspondant, et fait saillie hors de l'orifice 31 correspondant que la tige 17 soit dans sa position d'articulation ou dans sa position rétractée.

Ainsi, dans le présent exemple, quand les deux sous-ensembles chauffants 2,3 sont articulés, le boîtier principal 11 est dans sa position de connexion dans la cavité 28, les deux éléments d'entraînement 30 sont mis en butée contre les surfaces de guidage 29 par l'action des ressorts 20, les deux surfaces de guidage 29 étant conformées de sorte que, quand le boîtier principal 11 est en position de connexion, les tiges 17 sont dans leur position d'articulation.

Quand l'utilisateur veut séparer les deux sous-ensembles chauffants 2,3, le boîtier principal 11 est entraîné vers sa position de libération (et vers sa séparation du premier sous-ensemble chauffant 2), comme les deux ressorts 20 sollicitent les deux éléments d'entraînement 30 en direction de la cavité 28, et du fait de la forme des deux surfaces de guidage 29, la translation du boîtier principal 11 a pour conséquence le coulissement des deux tiges 17, de leur position d'articulation à leur position rétractée.

Quand l'utilisateur veut réunir les deux sous-ensembles chauffants 2,3, il les dispose correctement l'un à l'autre, ajuste correctement le boîtier principal 11 par rapport à la cavité 28 et l'entraîne jusqu'à sa position de connexion, les deux surfaces de guidage 29 entraînant les deux éléments d'entraînement 30 vers l'extérieur de la cavité 28 jusqu'à ce que les tiges 17 soient en position d'articulation.

Par ailleurs, pour des raisons de sécurité, le boîtier principal 11 coopère avec la charnière 4 de sorte qu'il est mobile de sa position de libération, jusqu'à sa position de connexion si les deux sous-ensembles chauffants 2,3 sont correctement disposés l'un à l'autre, ou jusqu'à une position d'arrêt située entre ses positions de libération et de connexion si les deux sous-ensembles chauffants 2,3 ne sont pas correctement disposés l'un par rapport à l'autre.

Ainsi, le boîtier principal 11 ne peut alimenter la résistance électrique 11 du premier sous-ensemble chauffant 2 que si les deux sous-ensembles chauffants 2,3 sont articulés l'un à l'autre.

L'amplitude du mouvement du boîtier principal 11 dépend du positionnement des deux sous-ensemble chauffants 2,3. En effet, le boîtier principal 11 coopère avec les deux tiges 17 et est conformé de manière à être mobile de sa position libération, jusqu'à sa position de connexion, si les éléments d'articulation 16 sont disposés dans leur logement 18, ou, jusqu'à sa position d'arrêt, si les éléments d'articulation 16 sont hors de leur logement 18.

Par ailleurs, l'amplitude du mouvement de chaque tige 17 dépend aussi du positionnement des deux sous-ensembles chauffants 2,3. En effet, chaque tige 17 est mobile de sa position rétractée, jusqu'à une position de contact dans laquelle l'élément d'articulation 16 est en butée dans le logement 18 correspondant, si les deux sous-ensembles chauffants 2,3 sont articulés l'un à l'autre, ou, jusqu'à une position déployée dans laquelle elle est fait saillie hors de l'orifice 24, au delà de sa position de contact, si les deux sous-ensembles chauffants 2,3 sont séparés l'un de l'autre.

Ainsi, chaque tige 17 peut prendre les quatre positions successives suivantes lors de son mouvement de translation: une position rétractée, une position d'articulation, la position de contact (qui est une des positions d'articulation), et une position déployée (uniquement si l'élément d'articulation 16 n'est pas dans le logement 18).

Le boîtier principal 11 est en outre mobile entre sa position de libération et une position de sélection située entre ses positions de libération et d'arrêt, et il est adapté à entraîner les deux tiges 17 de leur position rétractée jusqu'à leur position de contact quand il passe de sa position de libération à sa position de sélection.

Ainsi, le boîtier principal 11 peut prendre les quatre positions successives suivantes lors de son mouvement de translation: une position libération, une position de sélection, une position d'arrêt, et une position de connexion (uniquement si l'élément d'articulation 16 est en butée dans le logement 18).

Le boîtier principal 11 comprend, de chaque côté, un organe de sélection 32 qui est mobile entre une position d'entraînement et une position activée.

Chaque organe de sélection 32 est adapté à coopérer avec une tige 17 correspondante de sorte que, d'une part, quand l'élément d'articulation 16 est dans sa position de contact, hors du logement 18, il est dans sa position d'entraînement et il entraîne la tige 17 au delà de sa position de contact quand le boîtier principal 11 passe de sa position de sélection à sa position d'arrêt, et, d'autre part, quand l'élément d'articulation 16 est dans sa position de contact, dans le logement 18, la tige 17 l'entraîne de sa position d'entraînement à sa position activée quand le boîtier principal 11 passe de sa position de sélection à sa position de contact.

Un ressort 33 dont la force est supérieure à celle du ressort 20 sollicitant la tige 17 correspondante, sollicite l'organe de sélection 32 correspondant vers sa position d'entraînement.

Quand l'utilisateur veut alimenter la résistance électrique 7 du premier sous-ensemble chauffant 2, il entraîne le boîtier principal 11 de sa position de libération jusqu'à sa position de connexion.

Dans un premier temps, le boîtier principal 11 passe de sa position de libération à sa position de sélection et de ce fait, il entraîne les deux tiges 17 de leur position d'articulation jusque dans leur position de contact. A cette configuration particulière, chaque tige 17 coopère avec un organe de sélection 32 correspondant qui est en position d'entraînement du fait du ressort 33 (figure 6).

Dans un second temps, si les deux sous-ensembles chauffants 2,3 sont correctement disposés l'un par rapport à l'autre, chaque tige 17 est en butée dans son logement 18 et, quand le boîtier principal 11 est entraîné au delà de sa position de sélection, chaque tige 17 entraîne l'organe de sélection 32 correspondant de sa position d'entraînement à sa position activée. Du fait de la conformation de l'organe de sélection 32, le boîtier principal 11 peut être entraîné jusque dans sa position de connexion (figure 8).

Dans un second temps, si les deux sous-ensembles chauffants 2,3 ne sont pas correctement disposés l'un par rapport à l'autre, les tiges 17 ne sont pas en butée dans leur logement 18 et, quand le boîtier principal 11 est entraîné au delà de sa position de sélection, les organes de sélection 32 restent en position d'entraînement et entraînent les tiges 17 dans une position déployée (du fait du rapport de force des deux ressort 20,33). Du fait de la conformation de l'organe de sélection 32, le boîtier principal 11 est bloqué dans son mouvement avant qu'il n'atteigne sa position de connexion (figure 7).

Dans le présent exemple, chaque surface de guidage 29 comprend une surface d'entraînement 34 qui est adaptée à coopérer avec l'élément d'entraînement 30 de façon à entraîner l'élément d'articulation 16 de sa position rétractée à sa position de contact, une surface de sélection 35 qui est portée par l'organe de sélection 32 et qui prolonge la surface d'entraînement 34, une surface d'arrêt 36 qui prolonge la surface de sélection 35 quand l'organe de sélection 32 est en position d'entraînement et qui est conformée de manière à venir en butée contre l'élement d'entraînement 30 quand le boîtier principal 11 est en position d'arrêt, et une surface de mise en connexion 37 qui prolonge la surface de sélection 35 quand l'organe de sélection 32 est en position activée, qui s'étend au delà de la surface d'arrêt 36 et qui est aconformée de manière à maintenir l'élément d'articulation 16 dans le logement 18.

L'élément d'entraînement 30 est conformé de manière à pouvoir contourner la surface d'arrêt 36 quand il coulisse le long de la surface de mise en connexion 37.

Ainsi, quand la tige 17 est en position d'articulation, quand le boîtier principal 11 est entraîné en direction de sa position de sélection, l'élément d'entraînement 30 entre en contact avec la surface d'entraînement 34 qui agit comme une surface de came et entraîne la tige 17 jusqu'à sa position de contact.

Si la tige 17 est dans le logement 18, le mouvement du boîtier principal 11 et l'agencement de l'organe de sélection 32 font que l'élément d'entraînement 30, en appui contre la surface de sélection 35, entraîne l'organe de sélection 32 en position activée, coulisse le long de la surface de sélection 35 puis le long de la surface de mise en connexion 37.

Si la tige 17 n'est pas dans le logement 18, le mouvement du boîtier principal 11 et l'agencement de l'organe de sélection 32 font que l'élément d'entraînement 30 coulisse le long de la surface de sélection 35 de l'organe de sélection 32 en position d'entraînement qui agit comme une surface de came, et vient en butée contre la surface d'arrêt 36 qui interdit au boîtier principal 11 d'atteindre sa position de connexion.

On comprend bien que selon ce mode de réalisation particulier, l'alimentation du premier sous-ensemble chauffant 2 n'est possible que lorsque les deux sous-ensembles chauffants 2,3 sont articulés l'un à l'autre.

Par ailleurs, le boîtier secondaire 12 est connecté électriquement au boîtier principal 11 de sorte qu'il est alimenté par le boîtier principal 11 uniquement quand celui-ci alimente la résistance électrique 7 du premier sous-ensemble chauffant 2. Ceci est simplement réalisé par la connexion judicieuse des fils électriques du câble de liaison 13 aux connecteurs 9 du boîtier principal 11.

Bien évidemment l'invention n'est pas limitée au présent mode de réalisation et de nombreuses modifications peuvent y être apportées.

Les résistances pourraient ne pas être fixées aux plaques de cuisson, elles peuvent alors être soit en contact avec celles-ci (transmission de la chaleur par conduction), soit à distance (transmission par rayonnement)

Il serait aussi possible que chaque sous-ensemble chauffant comporte un réflecteur disposé entre la résistance électrique et la coquille afin de limiter la transmission de chaleur en direction de cette dernière.

Il serait aussi possible que le deuxième sous-ensemble chauffant comporte un organe de commande manuelle similaire à celui porté par le premier sous-ensemble chauffant afin de faciliter la déconnexion électrique du boîtier secondaire.

## Revendications

1. Appareil électroménager (1) comportant, d'une part, deux sous-ensembles chauffants (2,3) qui sont articulés entre eux par une charnière (4) et qui comprennent chacun une coquille (5) formant le corps du sous-ensemble (2,3), une plaque de cuisson (6) et une résistance électrique (7), et, d'autre part, un organe d'alimentation électrique (8) qui comprend des contacteurs (9) adaptés à établir la connexion électrique avec les résistances électriques (7) et l'ensemble des composants électriques de l'appareil (1) concourant à l'alimentation électrique contrôlée des résistances électriques quelle que soit la position des deux sous-ensembles chauffants (2,3), l'organe d'alimentation électrique (8) comprenant deux boîtiers de connexion électrique (11,12) reliés l'un à l'autre par un câble électrique de liaison (13), **caractérisé en ce que** l'organe d'alimentation électrique (8) est séparable des deux sous-ensembles chauffants (2, 3) et **en ce que** chaque boîtier de connexion (11,12) est séparable d'une coquille (5) correspondante en coopérant par enfichage avec celle-ci à la manière d'une prise électrique.

2. Appareil électroménager (1) selon la revendication 1, **caractérisé en ce que**, pour chaque sous-ensemble chauffant (2,3), la résistance électrique (7) est fixée à la plaque de cuisson (6).

3. Appareil électroménager (1) selon la revendication 2, **caractérisé en ce que**, pour chaque sous-ensemble chauffant (2,3), la plaque de cuisson (6) est fixée à la coquille (5).

4. Appareil électroménager (1) selon l'une des revendications 1 à 3, **caractérisé en ce que** l'organe d'alimentation électrique (8) est adapté à coopérer avec la charnière (4) par laquelle les deux sous-ensembles chauffants (2,3) sont articulés l'un par rapport à l'autre, de sorte que, quand l'organe d'alimentation électrique (8) est séparé des deux sous-ensembles chauffants (2,3), la charnière (4) est conformée de manière à permettre la séparation des deux sous-ensembles chauffants (2,3), et, quand l'organe d'alimentation électrique (8) est connecté aux résistances électriques (7) des sous-ensembles chauffants (2,3), la charnière (4) est conformée de manière à réaliser l'articulation entre les deux sous-ensembles chauffants (2,3).

5. Appareil électroménager (1) selon la revendication 4, **caractérisé en ce que** la charnière (4) comprend au moins un logement (18) qui est réalisé dans un sous-ensemble chauffant (3), et un élément d'articulation (16) qui est solidaire de l'autre sous-ensemble chauffant (2), qui est mobile entre une position d'articulation dans laquelle il pénètre dans le logement (18) et une position rétractée dans laquelle il est hors du logement (18), et qui est entraîné de l'une à l'autre de ses positions par l'organe d'alimentation électrique (8).

6. Appareil électroménager (1) selon la revendication 5, **caractérisé en ce qu'**un organe de rappel (20) sollicite l'élément d'articulation (16) vers sa position rétractée.

7. Appareil électroménager (1) selon la revendication 5 ou 6, **caractérisé en ce que** l'élément d'articulation (16) est portée par une tige (17) qui est montée coulissante par rapport au premier sous-ensemble chauffant (2) selon la direction de l'axe (19) de la charnière (4).

8. Appareil électroménager (1) selon l'une des revendications 5 à 7, **caractérisé en ce que** le boîtier principal (11) est monté coulissant sur le premier sous-ensemble chauffant (2) entre une position de libération dans laquelle il peut être séparé du premier sous-ensemble chauffant (2) et dans laquelle l'élément d'articulation (16) est dans sa position rétractée, et une position de connexion qui est la seule position dans laquelle il alimente la résistance électrique (7) correspondante et dans laquelle l'élément d'articulation (16) est dans sa position d'articulation.

9. Appareil électroménager (1) selon la revendication 8, **caractérisé en ce que** le boîtier principal (11) comprend une surface de guidage (29) conformée de manière à entraîner un élément d'entraînement (30) solidaire de l'élément d'articulation (16) pendant le déplacement du boîtier principal (11) entre ses positions de libération et de connexion.

10. Appareil électroménager (1) selon la revendication 8 ou 9, **caractérisé en ce que** le boîtier principal (11) coopère avec la charnière (4) de sorte qu'il est mobile de sa position de libération, jusqu'à sa position de connexion si les deux sous-ensembles chauffants (2,3) sont correctement disposés l'un à l'autre, ou jusqu'à une position d'arrêt située entre ses positions de libération et de connexion si les deux sous-ensembles chauffants (2,3) ne sont pas correctement disposés l'un par rapport à l'autre.

11. Appareil électroménager (1) selon l'une des revendications 5 à 10, **caractérisé en ce que** l'élément d'articulation (16) est mobile de sa position rétractée, jusqu'à une position de contact dans laquelle il est en butée dans le logement (18), si les deux sous-ensembles chauffants (2,3) sont articulés l'un à l'autre, ou, jusqu'à une position déployée dans laquelle il fait saillie au delà de sa position de contact, si les deux sous-ensemble chauffants (2,3) sont séparés l'un de l'autre.

12. Appareil électroménager (1) selon la revendication 11 dépendante de la revendication 10, **caractérisé en ce que** le boîtier principal (11) est mobile entre sa position de libération et une position de sélection située entre ses positions de libération et d'arrêt, et entraîne l'élément d'articulation (16) de sa position rétractée jusqu'à sa position de contact quand il passe de sa position de libération à sa position de sélection.

13. Appareil électroménager (1) selon la revendication 12, **caractérisé en ce que** le boîtier principal (11) comprend un organe de sélection (32) qui est mobile entre une position d'entraînement et une position activée, et qui est adapté à coopérer avec l'élément d'articulation (16) de sorte que, quand l'élément d'articulation (16) est dans sa position de contact hors du logement (18), l'organe de sélection (32) est dans sa position d'entraînement et entraîne l'élément d'articulation (16) au delà de sa position de contact quand le boîtier principal (11) passe de sa position de sélection à sa position d'arrêt, et, quand l'élément d'articulation (16) est dans sa position de contact dans le logement (18), l'élément d'articulation (16) entraîne l'organe de sélection (32) de sa position d'entraînement à sa position activée quand le boîtier principal (11) passe de sa position de sélection à sa position de connexion.

14. Appareil électroménager (1) selon la revendication 13 dépendante de la revendication 6, **caractérisé en ce qu'**un ressort (33) dont la force est supérieure à celle du ressort (20) sollicitant l'élément d'articulation (16), sollicite l'organe de sélection (32) vers sa position d'entraînement.

15. Appareil électroménager (1) selon la revendication 13 ou 14 dépendante de la revendication 9, **caractérisé en ce que** la surface de guidage (29) comprend une surface d'entraînement (34) qui est adaptée entraîner l'élément d'articulation (16) de sa position rétractée à sa position de contact, une surface de sélection (35) qui est portée par l'organe de sélection (32) et qui prolonge la surface d'entraînement (34), une surface d'arrêt (36) qui prolonge la surface de sélection (35) quand l'organe de sélection (32) est en position d'entraînement et qui est conformée de manière à venir en butée contre l'élément d'entraînement (30) quand le boîtier principal (11) est en position d'arrêt, et une surface de mise en connexion (37) qui prolonge la surface de sélection (35) quand l'organe de sélection (32) est en position activée, qui s'étend au delà de la surface d'arrêt (36) et qui est conformée de manière à maintenir l'élément d'articulation (16) dans le logement (18), l'élément d'entraînement (30) étant conformé de manière à pouvoir contourner la surface d'arrêt (36) quand il coulisse le long de la surface de mise en connexion (37).

16. Appareil électroménager (1) selon l'une des revendications 1 à 15, **caractérisé en ce que** l'organe d'alimentation (8) comprend un organe de préhension (40) permettant de le déplacer manuellement.

17. Appareil électroménager (1) selon l'une des revendications 1 à 16, **caractérisé en ce que** l'un des sous-ensembles chauffants (2,3) comprend un organe de commande manuelle (41) qui est mobile entre une position de repos et une position d'éjection et qui est adapté à coopérer avec l'organe d'alimentation (8) de façon à entraîner ce dernier hors de sa position dans laquelle il est connecté avec les résistances électriques (7).

18. Appareil électroménager (1) selon la revendication 17, **caractérisé en ce que** l'organe de commande manuelle (41) est un bouton (41) qui est monté coulissant dans le sous-ensemble chauffant et qui comprend une surface inclinée (43) adaptée à glisser contre une surface inclinée complémentaire (44) de l'organe d'alimentation (8) de façon à déplacer ce dernier.

19. Appareil électroménager (1) selon la revendication 17, **caractérisé en ce que** l'organe de commande manuelle (41) est un levier (41) qui est monté pivotant dans le sous-ensemble chauffant autour d'un axe de pivotement (45) et qui comprend une surface de came (46) qui est adaptée à venir en butée contre l'organe d'alimentation (8) et à le déplacer quand le levier (41) pivote.

## Claims

1. Household electrical appliance (1) comprising, at the one hand, two heating sub-assemblies (2, 3) which are articulated on each other by a hinge (4) and which each include a shell (5) forming the body of the sub-assembly (2, 3), a cooking plate (6) and an electric resistance (7), and, at the other hand, an electricity supply component (8) which includes contactors (9) adapted to establish the electrical connection with the electric resistances (7) and all the electrical components of the appliance (1) contributing to the controlled electricity supply of the electric resistances whatever position the two heating sub-assemblies (2, 3) are in, the electricity supply component (8) including two connection case (11, 12) connected to each other by a connecting cable (13), **characterised in that** the electricity supply component (8) can be separated from the two heating sub-assemblies (2, 3) and **in that** each connection case (11, 12) can be separated from a corresponding shell (15) by a plugging into said shell (15) in the manner of an electric plug.

2. Household electrical appliance (1) according to claim 1, **characterised in that**, for each heating sub-assembly (2, 3), the electric resistance (7) is anchored to the cooking plate (6).

3. Household electrical appliance (1) according to claim 2, **characterised in that**, for each heating sub-assembly (2, 3), the cooking plate (6) is anchored to the shell (5).

4. Household electrical appliance (1) according to one of claims 1 to 3, **characterised in that** the electricity supply component (8) is adapted to engage with the hinge (4) by which the two heating sub-assemblies (2, 3) are articulated one relative to the other, such that, when the electricity supply component (8) is separated from the two heating sub-assemblies (2, 3), the hinge (4) is configured so as to allow the separation of the two heating sub-assemblies (2, 3), and, when the electricity supply component (8) is connected to the electric resistances (7) of the heating sub-assemblies (2, 3), the hinge (4) is configured so as to implement the articulation between the two heating sub-assemblies (2, 3).

5. Household electrical appliance (1) according to claim 4, **characterised in that** the hinge (4) includes at least one housing (18) which is implemented in a heating sub-assembly (3), and an articulation element (16) which is integral with the other heating sub-assembly (2), which is mobile between an articulation position in which it penetrates into the housing (18) and a retracted position in which it is outside the housing (18), and which is driven from one to the other of its positions by the electricity supply component (8).

6. Household electrical appliance (1) according to claim 5, **characterised in that** a return component (20) acts upon the articulation element (16) to bring it towards its retracted position.

7. Household electrical appliance (1) according to claim 5 or 6, **characterised in that** the articulation element (16) is carried by a rod (17) which is mounted to slide relative to the first heating sub-assembly (2) along the direction of the axis (19) of the hinge (4).

8. Household electrical appliance (1) according to one of claims 5 to 7, **characterised in that** the main case (11) is mounted to slide on the first heating sub-assembly (2) between a release position in which it can be separated from the first heating sub-assembly (2) and in which the articulation element (16) is in its retracted position, and a connection position which is the only position in which it supplies power to the corresponding electric resistance (7) and in which the articulation element (16) is in its articulation position.

9. Household electrical appliance (1) according to claim 8, **characterised in that** the main case (11) includes a guide surface (29) configured so as to drive a drive element (30) integral with the articulation element (16) during the displacement of the main case (11) between its release and connection positions.

10. Household electrical appliance (1) according to claim 8 or 9, **characterised in that** the main case (11) engages with the hinge (4) so that it is mobile from its release position, as far as its connection position if the two heating sub-assemblies (2, 3) are correctly arranged one relative to the other, or as far as a stop position located between its release and connection positions if the two heating sub-assemblies (2, 3) are not correctly arranged one relative to the other.

11. Household electrical appliance (1) according to one of claims 5 to 10, **characterised in that** the articulation element (16) is mobile from its retracted position, as far as a contact position in which it is stopped in the housing (18), if the two heating sub-assemblies (2, 3) are articulated one on the other, or, as far as a deployed position in which it projects beyond its contact position, if the two heating sub-assemblies (2, 3) are separated one from the other.

12. Household electrical appliance (1) according to claim 11 dependent on claim 10, **characterised in that** the main case (11) is mobile between its release position and a selection position located between its release and stop positions, and drives the articulation element (16) from its retracted position as far as its contact position when it moves from its release position to its selection position.

13. Household electrical appliance (1) according to claim 12, **characterised in that** the main case (11) includes a selection component (32) which is mobile between a drive position and an activated position, and which is adapted to engage with the articulation element (16) so that, when the articulation element (16) is in its contact position outside the housing (18), the selection component (32) is in its drive position and drives the articulation element (16) beyond its contact position when the main case (11) moves from its selection position to its stop position, and, when the articulation element (16) is in its contact position in the housing (18), the articulation element (16) drives the selection component (32) from its drive position to its activated position when the main case (11) moves from its selection position to its connection position.

14. Household electrical appliance (1) according to claim 13 dependent on claim 6, **characterised in that** a spring (33) the force of which is greater than that of the spring (20) acting upon the articulation element (16), acts upon the selection component (32) to bring it to its drive position.

15. Household electrical appliance (1) according to claim 13 or 14 dependent on claim 9, **characterised in that** the guide surface (29) includes a drive surface (34) which is adapted to drive the articulation element (16) from its retracted position to its contact position, a selection surface (35) which is carried by the selection component (32) and which extends the drive surface (34), a stop surface (36) which extends the selection surface (35) when the selection component (32) is in the drive position and which is configured so as to come to a stop against the drive element (30) when the main case (11) is in the stop position, and a connecting surface (37) which extends the selection surface (35) when the selection component (32) is in the activated position, which extends beyond the stop surface (36) and which is configured so as to keep the articulation element (16) in the housing (18), the drive element (30) being configured so as to be able to skirt round the stop surface (36) when it slides along the connecting surface (37).

16. Household electrical appliance (1) according to one of claims 1 to 15, **characterised in that** the electricity supply component (8) includes a gripping component (40) allowing it to be displaced manually.

17. Household electrical appliance (1) according to one of claims 1 to 16, **characterised in that** one of the heating sub-assemblies (2, 3) includes a manual control component (41) which is mobile between a rest position and an ejection position and which is adapted to engage with the electricity supply component (8) so as to drive the latter out of its position in which it is connected with the electric resistances (7).

18. Household electrical appliance (1) according to claim 17, **characterised in that** the manual control component (41) is a button (41) which is mounted to slide in the heating sub-assembly and which includes an inclined surface (43) adapted to slide against a complementary inclined surface (44) of the electricity supply component (8) in order to displace it.

19. Household electrical appliance (1) according to claim 17, **characterised in that** the manual control component (41) is a lever (41) which is mounted to pivot in the heating sub-assembly around a fulcrum pin (45) and which includes a cam surface (46) which is adapted to come to a stop against the electricity supply component (8) and to displace it when the lever (41) pivots.

## Patentansprüche

1. Elektrisches Haushaltsgerät, umfassend einerseits zwei Heiz-Unterbaugruppen (2, 3), welche mittels eines Scharniers (4) miteinander gelenkig verbunden sind und jeweils eine den Körper der Unterbaugruppe (2, 3) bildende Schale (5), eine Garplatte (6) und einen elektrischen Widerstand (7) haben, und andererseits ein Stromspeiseorgan (8), das Kontakte (9) hat, welche die elektrische Verbindung zu den elektrischen Widerständen (7) und zur Gesamtheit der elektrischen Komponenten des Gerätes (1) herstellen kann, welche zur kontrollierten Stromversorgung der elektrischen Widerstände unabhängig von der Position der beiden Heiz-Unterbaugruppen (2, 3) beitragen, wobei das Stromspeiseorgan zwei elektrische Anschlusskästen (11, 12) hat, die miteinander über ein elektrisches Verbindungskabel (13) verbunden sind, **dadurch gekennzeichnet, dass** das Stromspeiseorgan (8) von den beiden Heiz-Unterbaugruppen (2, 3) trennbar ist, und dass jeder Anschlusskasten (11, 12) von der entsprechenden Schale (5) trennbar ist, mit der er mittels Steckverbindung in der Art einer Stromabnahme zusammenwirkt.

2. Elektrisches Haushaltsgerät (1) nach Anspruch 1, **dadurch gekennzeichnet, dass** bei jeder Heiz-Unterbaugruppe (2, 3) der elektrische Widerstand (7) der Garplatte (6) fixiert ist.

3. Elektrisches Haushaltsgerät (1) nach Anspruch 2, **dadurch gekennzeichnet, dass** bei jeder Heiz-Unterbaugruppe (2, 3) die Garplatte (6) an der Schale (5) fixiert ist.

4. Elektrisches Haushaltsgerät (1) nach einem der Ansprüche 1 bis 3, **dadurch gekennzeichnet, dass** das Stromspeiseorgan (8) dazu eingerichtet ist, mit dem Scharnier (4) zusammenzuwirken, über welches die beiden Heiz-Unterbaugruppen (2, 3) gelenkig miteinander verbunden sind, derart, dass dann, wenn das Stromspeiseorgan (8) von den beiden Heiz-Unterbaugruppen getrennt wird, das Scharnier (4) dazu ausgebildet ist, die Trennung der beiden Heiz-Unterbaugruppen (2, 3) zu ermöglichen, und dass dann, wenn das Stromspeiseorgan (8) mit den elektrischen Widerständen (7) der Heiz-Unterbaugruppen (2, 3) verbunden wird, das Scharnier (4) dazu eingerichtet ist, die Schwenkung zwischen den beiden Heiz-Unterbaugruppen (2, 3) zu gestatten.

5. Elektrisches Haushaltsgerät (1) nach Anspruch 4, **dadurch gekennzeichnet, dass** das Scharnier (4) mindestens ein Lager (18) aufweist, welches in einer Heiz-Unterbaugruppe (3) ausgebildet ist, und dass ein Schwenkelement (16), welches fest mit der anderen Heiz-Unterbaugruppe (2) ist, zwischen einer Schwenkposition, in welcher es in das Lager (18) eindringt, und einer zurückgezogenen Position beweglich ist, in der es sich außerhalb des Lagers (18) befindet, und von der einen in die andere Position mittels des Stromspeiseorgans (8) angetrieben ist.

6. Elektrisches Haushaltsgerät (1) nach Anspruch 5, **dadurch gekennzeichnet, dass** ein Rückstellorgan (20) das Schwenkelement (16) in seine zurückgezogene Position drängt.

7. Elektrisches Haushaltsgerät (1) nach Anspruch 5 oder 6, **dadurch gekennzeich-net, dass** das Schwenkelement (16) von einer Stange (17) getragen ist, die bezüglich der ersten Heiz-Unterbaugruppe gleitend in Richtung der Achse (19) des Scharniers (4) angeordnet ist.

8. Elektrisches Haushaltsgerät (1) nach einem der Ansprüche 5 bi 7, **dadurch gekenn-zeichnet, dass** der Haupt-Anschlusskasten (11) gleitend an der ersten Heiz-Unterbaugruppe (2) zwischen einer Freigabeposition, in welcher er von der ersten Heiz-Unterbaugruppe (2) getrennt werden kann und in welcher das Schwenkelement (16) in seiner zurückgezogenen Position sich befindet, und einer Verbindungsposition angeordnet ist, welche die einzige Position darstellt, in welcher er den entsprechenden elektrischen Widerstand (7) mit Strom versorgt und in welcher das Schwenkelement (16) in seiner Schwenkposition sich befindet.

9. Elektrisches Haushaltsgerät (1) nach Anspruch 8, **dadurch gekennzeichnet, dass** der Haupt-Anschlusskasten (11) eine Führungsfläche (29) aufweist, welche so ausgebildet ist, dass sie ein Treibelement (30), welches fest mit dem Schwenkelement (16) ist, während der Verlagerung des Haupt-Anschlusskastens (11) zwischen seiner Freigabe- und seiner Verbindungsposition antreibt.

10. Elektrisches Haushaltsgerät (1) nach Anspruch 8 oder 9, **dadurch gekennzeichnet. dass** der Hauptanschlusskasten (11) mit dem Scharnier (4) derart zusammenwirkt, dass dieses in seiner Freigabeposition bis in seine Verbindungsposition bewegbar ist, wenn die beiden Heiz-Unterbaugruppen (2, 3) korrekt zueinander ausgerichtet sind, oder bis in eine Ruheposition, die zwischen der Freigabeposition und der Verbindungsposition liegt, wenn die beiden Heiz-Unterbaugruppen (2, 3) nicht korrekt zueinander ausgerichtet sind.

11. Elektrisches Haushaltsgerät (1) nach einem der Ansprüche 5 bis 10, **dadurch gekennzeichnet, dass** das Schwenkelement (16) aus seiner zurückgezogenen Position in eine Kontaktposition beweglich ist, in welcher es in dem Lager (18) am Anschlag steht, wenn die beiden Heiz-Unterbaugruppen (2, 3) zueinander geschwenkt sind, oder in eine aufgeklappte Position, in welcher es aus seiner Kontaktposition ausgehoben ist, wenn die beiden Heiz-Unterbaugruppen (2, 3) voneinander getrennt sind.

12. Elektrisches Haushaltsgerät (1) nach Anspruch 10 und 11, **dadurch gekennzeichnet, dass** der Haupt-Anschlusskasten (11) zwischen seiner Freigabeposition und einer Auswahl-Position zwischen seiner Freigabe- und seiner Ruheposition beweglich ist und das Schwenkelement (16) aus seiner zurückgezogenen Position bis zu seiner Kontaktposition treibt, wenn er sich aus seiner Freigabeposition in seine Auswahlposition bewegt.

13. Elektrisches Haushaltsgerät (1) nach Anspruch 12, **dadurch gekennzeichnet, dass** der Haupt-Anschlusskasten ein Wählorgan (32) hat, das zwischen einer Antriebsposition und einer aktivierten Position beweglich ist und das mit dem Schwenkelement (16) derart zusammenwirken kann, dass bei dem Schwenkelement (16) in seiner Kontaktposition außerhalb des Lagers (18) das Wählorgan (32) in seiner Antriebsposition ist und das Schwenkelement über seine Kontaktposition hinaus treibt, wenn der Haupt-Anschlusskasten (11) sich von seiner Wählposition in seine Ruheposition bewegt, und, wenn das Schwenkelement (16) in seiner Kontaktposition in dem Lager (18) ist, das Schwenkelement (16) das Wählorgan (32) aus seiner Antriebsposition in seine aktivierte Position treibt, wenn der Haupt-Anschlusskasten (11) sich aus seiner Wählposition in seine Anschlussposition verlagert.

14. Elektrisches Haushaltsgerät (1) nach Anspruch 14 in Abhängigkeit von Anspruch 6, **dadurch gekennzeichnet, dass** eine Feder (33), deren Kraft größer als diejenige der Feder (20) ist, welche das Schwenkelement (16) beaufschlagt, das Auswahlorgan (32) in seine Antriebsposition drängt.

15. Elektrisches Haushaltsgerät (1) nach Anspruch 13 oder 14 in Abhängigkeit von Anspruch 9, **dadurch gekennzeichnet, dass** die Führungsfläche (29) eine Mitnahmefläche (34) aufweist, welche das Schwenkelement (16) aus seiner zurückgezogenen Position in seine Kontaktposition antreiben kann, eine Selektionsfläche (35), welche am Auswahlorgan (32) ausgebildet ist und die Mitnahmefläche (34) verlängert, eine Anschlagfläche (36), welche die Selektionsfläche (35) verlängert, wenn das Wählorgan (32) in Antriebsposition ist, und welche so ausgebildet ist, dass sie in Anschlag an dem Antriebselement (30) gelangt, wenn der Haupt-Anschlusskasten (11) in Ruheposition ist, und eine Verbindungsherstellfläche (37), welche die Auswahlfläche (35) verlängert, wenn das Auswahlorgan (32) in aktivierter Position ist, die sich über die Anschlagfläche (36) hinaus erstreckt und derart ausgebildet ist, dass sie das Schwenkelement (16) in seinem Lager (18) hält, wobei das Antriebselement (30) derart ausgebildet ist, dass es die Anschlagfläche (36) umfahren kann, wenn es längs der Verbindungsherstellfläche (37) entlang gleitet.

16. Elektrisches Haushaltsgerät (1) nach einem der Ansprüche 1 bis 15, **dadurch gekennzeichnet, das** das Stromspeiseorgan (8) ein Greiforgan (40) umfasst, das seine manuelle Verlagerung erlaubt.

17. Elektrisches Haushaltsgerät (1) nach einem der Ansprüche 1 bis 16, **dadurch gekennzeichnet, dass** eine der Heiz-Unterbaugruppen (2, 3) ein Handsteuerorgan (41) umfasst, welches zwischen einer Ruhestellung und einer Auswerfstellung beweglich ist und mit dem Stromspeiseorgan (8) derart zusammenwirken kann, dass sie letzteres aus einer Position austreiben kann, in welcher es mit den elektrischen Widerständen (7) verbunden ist.

18. Elektrisches Haushaltsgerät (1) nach Anspruch 17, **dadurch gekennzeichnet, dass** das Handsteuergerät (41) ein Knopf (41) ist, der gleitend in der Heiz-Unterbaugruppe aufgenommen ist und eine geneigte Oberfläche (43) umfasst, die auf einer komplementär geneigten Fläche (44) des Stromspeiseorgans (8) gleiten kann, um letzteres zu verlagern.

19. Elektrisches Haushaltsgerät (1) nach Anspruch 17, **dadurch gekennzeichnet, dass** das Handsteuergerät (41) ein Hebel (41) ist, der um eine Schwenkachse (45) schwenkbar montiert ist und eine Nockenfläche (46) aufweist, die in Anlage an dem Stromspeiseorgan (8) kommen und dieses beim Schwenken des Hebels (41) verlagern kann.
